# EUROPÄISCHE PATENTANMELDUNG

(11) **EP 4 122 761 A1**
(43) Veröffentlichungstag der Anmeldung: **25.01.2023**
(21) Anmeldenummer: 22166239.8
(22) Anmeldetag: 01.04.2022
(51) Int. Cl.: B60P 1/16

(54) **PKW-KIPPANHÄNGER**

(30) Priorität: 20.07.2021 DE 202021103853 U
(71) Anmelder: AUER Hydraulics GmbH, 42699 Solingen (DE)
(72) Erfinder: Auer, Michael, 42699 Solingen (DE)
(74) Vertreter: Patentanwälte Vomberg & Schart

(57) **Zusammenfassung**

Die Erfindung betrifft einen PKW-Kippanhänger, der über einen Kabelanschluss mit dem Spannungsbordnetz eines PKW verbindbar ist, mit einem Anhängerrahmen und einer schwenkbar angeordneten Ladebrücke, die mittels eines Hydraulikaggregates heb- und senkbar ist, das eine Pumpe und einen Hydraulikzylinder aufweist, die von einem Elektromotor antreibbar sind, der über eine drahtlose Fernsteuerung steuer- und/oder regelbar ist. Um ein versehentliches Auslösen des Hydraulikaggregates sicher zu vermeiden, wird zwischen dem Elektromotor (7) und dem Spannungsbordnetz (10, 11) des PKW ein Schalter angeordnet, der die Spannungszufuhr des Elektromotors (7) unterbricht, sobald und solange die Zündung des PKW aktiviert ist.

## Beschreibung

Die Erfindung betrifft einen PKW-Kippanhänger, der über einen Kabelanschluss mit dem Spannungsbordnetz eines PKW verbindbar ist, mit einem Anhängerrahmen und einer schwenkbar angeordneten Ladebrücke, die mittels eines Hydraulikaggregates heb- und senkbar ist, das eine Pumpe und einen Hydraulikzylinder aufweist, die von einem Elektromotor antreibbar sind, der über eine drahtlose Fernsteuerung steuer- und/oder regelbar ist.

Kippanhänger, die temporär an einen mit einer Anhängerkupplung ausgestatteten PKW gehängt werden können, eignen sich zum Transport schwerer Lasten wie z.B. Bau-, Abriss- und Gartenabfall, Sand, Steinen und sonstigen Schüttgütern. Die Kippanhänger können als Rückwärtskipper oder auch als Dreiseitenkipper ausgebildet sein. Das Hydraulikaggregat besitzt einen Hydraulikzylinder, wenigstens ein elektrisch ansteuerbares Kippventil zur Steuerung des Hubbetriebes und des Senkbetriebes des Hydraulikzylinders sowie ein Hydraulikreservoir, aus dem mittels der bereits erwähnten Pumpe das Hydrauliköl gefördert werden kann. Die Hydraulikaggregate können große Kräfte erzeugen. Der Elektromotor, der zum Antrieb der Hydraulikpumpe verwendet wird, erhält seine Spannung aus einer Anhängerbatterie.

Gesteuert oder geregelt wird der Elektromotor vorzugsweise über eine drahtlose Fernsteuerung, welche nicht nur eine bequeme Bedienung ermöglicht, sondern auch den Vorteil hat, dass die Ladebrücke auch aus der Entfernung gehoben und gesenkt werden kann. Eine drahtlose Fernsteuerung kann aus einer Funkfernsteuerung oder einer Anwendungssoftware (APP) mittels Bluetooth-Verbindungen realisiert werden. Die betreffenden Bediengeräte besitzen Tasten oder Bedienfelder für das Heben der Ladebrücke, das Senken der Ladebrücke, ggf. einen Notausschalter und einen Regler, mit dem die Hub- und Senkgeschwindigkeit eingestellt werden kann.

Die betreffenden Handgeräte werden im PKW mitgeführt. Dies kann dazu führen, dass sich der Fahrer oder Beifahrer versehentlich auf das Handgerät setzt und ungewollt einen Hubimpuls auslöst. Solche Hubauslösungen können auch von mitfahrenden Personen (z.B. Kindern) verursacht werden. Das ungewollte Hochklappen einer Ladebrücke stellt jedenfalls eine hohe Gefahrenquelle dar, die vermieden werden soll.

Es sind Kippanhänger bekannt, deren Ladebrücken fixiert werden können. Zwar vermeidet eine solche Fixierung das ungewollte Aufklappen der Ladebrücke, aber nicht aufgrund der hohen durch die Hydraulik erzeugten Kräfte drohende Verformungen der Brücke bzw. des Hilfsrahmens, die zur Beseitigung der Schäden aufwendigere Reparaturen notwendig machen.

Es ist daher Aufgabe der vorliegenden Erfindung, einen PKW-Kippanhänger zu schaffen, bei dem ein versehentliches Auslösen des Hydraulikaggregates sicher vermieden werden kann.

Diese Aufgabe wird bei dem PKW-Kippanhänger nach Anspruch 1 dadurch gelöst, dass zwischen dem Elektromotor und dem Spannungsbordnetz des PKW ein Schalter angeordnet ist, der die Spannungszufuhr des Elektromotors unterbricht., sobald und solange die Zündung des PKW aktiviert ist.

Diese Zwangsabschaltung des Elektromotors durch Unterbrechung der Spannung ist relativ einfach und sicher, da ohne den Elektromotor die Hydraulikpumpe nicht arbeiten kann. Es sind auch keine zusätzlichen Arbeiten wie etwa eine Verriegelung mittels Bolzen oder sonstige Abschaltungen erforderlich, die aus Fahrlässigkeit oder Unachtsamkeit vergessen werden können. Ungewollte Betätigungen der Bedienschalter oder Bedienfelder bleiben jedenfalls wirkungslos, so lange die Zündung des PKW aktiviert ist.

Dies gilt auch für PKW mit einer Start-Stopp-Automatik, da das elektrische System auch bei abgeschaltetem Motor weiter arbeitet.

Vorzugsweise besteht der Schalter aus einem Relais. Diese Bauteile sind kostengünstig und arbeiten zuverlässig.

Weitere Details werden im folgenden anhand der Figuren beschrieben. Es zeigen:
- Fig. 1: eine schematische Darstellung eines PKW-Kippanhängers und
- Fig. 2: eine Schaltskizze.

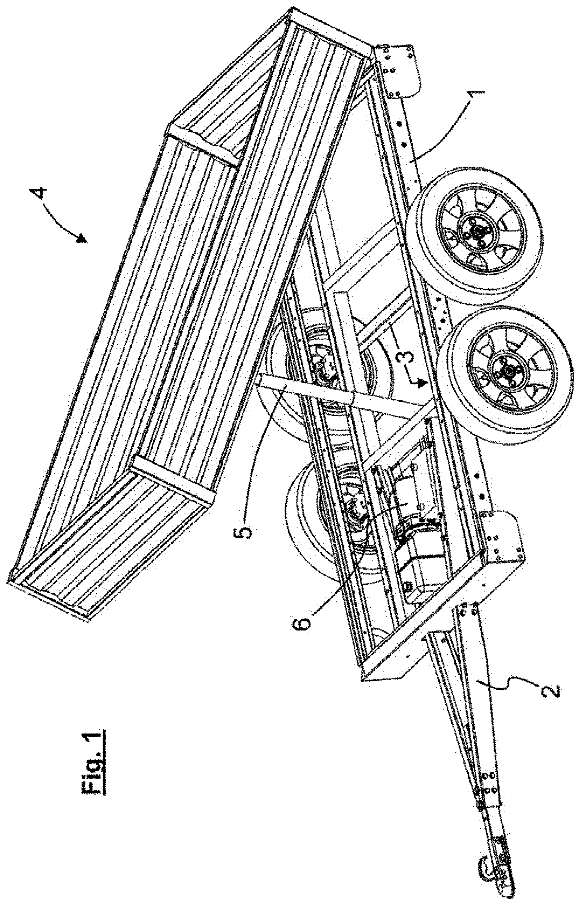

Der PKW-Kippanhänger nach Fig. 1 besitzt einen Anhängerrahmen 1, dessen vorderer Teil als Zugdeichsel 2 ausgebildet ist. Das Fahrgestell besteht im vorliegenden Fall aus zwei Achsen 3, kann jedoch auch ein- oder dreiachsig ausgeführt sein.

An dem Anhängerrahmen 1 angelenkt ist eine schwenkbar angeordnete Ladebrücke 4, die im vorliegenden Fall als Rückwärtskipper ausgebildet ist. Wesentliche Teile des Hydraulikaggregates sind der (Teleskop-)Hydraulikzylinder 5 sowie die Pumpe 6, die von einem Elektromotor betrieben wird, und womit das Hydrauliköl aus einem Hydraulikreservoir in die Hubzylinder gepumpt werden kann. Der Elektromotor bezieht seine Spannung aus einer am Kippanhänger angeordneten Batterie. Die Anhängerbatterie hat den Vorteil, dass die Ladebrücke des Kippanhängers auch unabhängig von dem PKW, also nach dem Entkuppeln, betrieben werden kann.

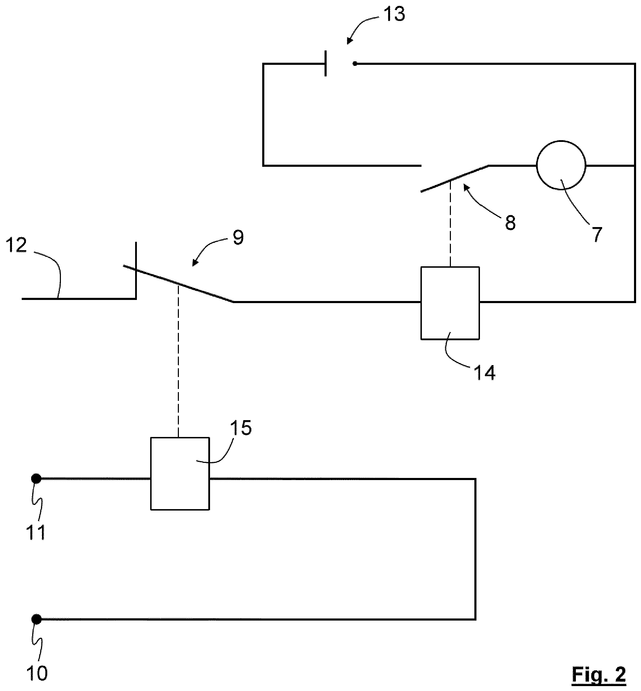

Wie aus der schematischen Zeichnung in Fig. 2 ersichtlich, ist der Elektromotor 7 in einem Stromkreis integriert, der über einen Schalter 8 geöffnet oder geschlossen werden kann. Dies geschieht über ein Relais 14, das Funkfernsignale 12 von einem Handgerät erhält. Zusätzlich ist ein weiteres Relais 15 vorgeschaltet, das als Öffner derart ausgebildet ist, dass bei aktivierter PKW-Zündung die Spannungszufuhr des Elektromotors unterbrochen wird. Dies geschieht über die Pole 10 und 11 zum Kraftfahrzeug, die auch zur elektrischen Versorgung der Leuchtanzeigen (Bremslicht, Blinker, Rücklicht) am Anhänger verwendet werden. Bei aktivierter Zündung oder im Falle einer Start-Stopp-Automatik bei laufendem Motor ist die Stromversorgung des Elektromotors abgeschaltet, so dass eine Fehlbedienung während der Fahrt ausgeschlossen werden kann.

### Bezugszeichenliste

- 1: Anhängerrahmen
- 2: Zugdeichsel
- 3: Achse
- 4: Ladebrücke
- 5: Hydraulikzylinder
- 6: Pumpe
- 7: Elektromotor
- 8: Schalter
- 9: Schalter
- 10: Pol
- 11: Pol
- 12: Signal FB
- 13: Batterie
- 14, 15: Relais

## Patentansprüche

1. PKW-Kippanhänger, der über einen Kabelanschluss mit dem Spannungsbordnetz eines PKW verbindbar ist, mit einem Anhängerrahmen (1) und einer schwenkbar angeordneten Ladebrücke (4), die mittels eines Hydraulikaggregates heb- und senkbar ist, das eine Pumpe (6) und einen Hydraulikzylinder (5) aufweist, die von einem Elektromotor (7) antreibbar sind, der über eine drahtlose Fernsteuerung (12) steuer- und/oder regelbar ist,
**dadurch gekennzeichnet, dass**
zwischen dem Elektromotor (7) und dem Spannungsbordnetz (10, 11) des PKW ein Schalter angeordnet ist, der die Spannungszufuhr des Elektromotors (7) unterbricht, sobald und solange die Zündung des PKW aktiviert ist.

2. PKW-Kippanhänger nach Anspruch 1, **dadurch gekennzeichnet, dass** der Schalter aus einem Relais (14, 15) besteht.

3. PKW-Kippanhänger nach Anspruch 1 oder 2, **dadurch gekennzeichnet, dass** die drahtlose Fernsteuerung eine Funkfernsteuerung oder eine Anwendungssoftware oder eine Bluetooth-Verbindung ist.
